# DEMANDE DE BREVET EUROPEEN

(11) **EP 0 915 107 A1**
(43) Date de publication de la demande: **12.05.1999**
(21) Numéro de dépôt: 98402668.2
(22) Date de dépôt: 27.10.1998
(51) Int. Cl.: C08F 220/34, C08F 220/60, C08F 2/28

(54) **Dispersions aqueuses salines de polymères hydrosolubles contenant un dispersant amphiphile à base de polymère cationique ayant des motifs hydrophobes**

(30) Priorité: 04.11.1997 FR 9713860
(71) Demandeur: ELF ATOCHEM S.A., 92800 Puteaux, Hauts-de-Seine (FR)
(72) Inventeur: Tembou Nzudie, Denis, 27470 Serquigny (FR); Collette, Christian, 75005 Paris (FR)

(57) **Abrégé**

L'invention concerne les dispersions aqueuses salines contenant un polymère hydrosoluble et un dispersant a base de polymère, de préférence cationique, ayant des motifs hydrophobes.

## Description

La présente invention se rapporte aux dispersions aqueuses de polymères hydrosolubles contenant un sel et un dispersant amphiphile à base de polymère cationique ayant des motifs hydrophobes. Elle concerne aussi tels dispersants ainsi que leur procédé de préparation.

Les polymères hydrosolubles sont utilisés pour différentes applications et en particulier comme floculants pour le traitement des eaux urbaines résiduaires et industrielles, la déshydratation des boues générées, comme épaississant et agent de traitement des sols. Il est bien connu que les systèmes aqueux de tels polymères hydrosolubles à haut extrait-sec sont gélatineux et présentent des viscosités très élevées, qui rendent leur manipulation et stockage difficiles. Le problème posé à l'homme du métier est la réalisation de tels systèmes aqueux mais ayant à la fois un extrait-sec élevé et une faible viscosité.

Les procédés conventionnels de synthèse de ces polymères comprennent la polymérisation en solution, suspension inverse et émulsion inverse. La solution et la suspension inverse conduisent à des produits à l'état de poudre qui présentent l'inconvénient de générer de la poussière au moment de l'utilisation, de se dissoudre difficilement dans l'eau et de ne pas pouvoir former des solutions aqueuses de polymères de concentration élevée qui puissent être manipulées aisément. Outre cette mise en oeuvre incommode qui est propre à l'état pulvérulent du produit, ces deux procédés sont handicapés en terme de productivité, d'une part en raison de la faible concentration en monomère utilisée en cours de polymérisation, et d'autre part à cause d'une étape de séchage et/ou broyage induisant une augmentation du temps de cycle et un surcoût de consommation d'énergie. Le procédé en émulsion inverse qui est connu depuis environ deux décennies, conduit quant à lui à un produit ayant un solvant organique polluant.

Pour remédier à ces inconvénients, il a été développé une nouvelle technique de polymérisation conduisant à des dispersions aqueuses de polymères hydrosolubles dont l'originalité réside sur le plan de la présentation, c'est-à-dire, exemptes de solvant polluant, ne générant pas de poussière, rapidement solubles dans l'eau, de faible viscosité à taux de polymère élevé, et prêtes à l'emploi. En revanche cette technologie nécessite la mise au point des dispersants polymères adaptés pour la stabilité du polymère dispersé en milieu salin ou non salin.

Certains auteurs ont préparé des polymères hydrosolubles cationiques ou non ioniques par polymérisation de monomères hydrosolubles en présence de dispersant polymère de faible masse. EP 170 394 décrit une dispersion de particule de gel de polymère de taille supérieure à 20µm dans une solution de dispersant poly(acrylate de sodium) ou de poly(DADMAC), désignant le chlorure de polydiallyldiméthylammonium. Cependant ce produit présente l'inconvénient d'avoir une viscosité élevée après une longue période de stockage. La viscosité ne pouvant être diminuée qu'après cisaillement ou agitation.

Les brevets US 183466, EP 525751 A1, US 4 929 655, US 5 006 590 et EP 657 478 A2 proposent le cas de polymérisation précipitante en milieu salin de monomères hydrosolubles dont le polymère précipite sous forme de particules, puis disperse par le biais de l'agitation et stabilisé par des dispersants polymères de faible masse, solubles quant à eux en milieu salin. Les dispersants typiques de ces polymérisations sont le poly-DADMAC ou le copo-DADMAC/(M)ADAMQUAT C16, ce dernier monomère désignant le chlorure de (meth)acryloxyethyldimetylhexadecylammonium (EP 657 478 A2). Dans le cadre des polymérisations en milieu salin, le brevet EP 0717 056 A2 revendique des dispersions de polymères hydrosolubles amphotères, à base de monomères cationiques et anioniques (acide acrylique), synthétisées en présence de dispersant homopolymères de monomères cationiques, ou copolymère des mêmes monomères cationiques avec l'acrylamide.

Le mélange typique de monomère pour ce type de polymérisation est constitué de (méth)acrylamide, de chlorure de (méth)acryloxyéthyltriméthyl ammonium et de chlorure de (méth)acryloxyéthyldiméthyil benzyl ammonium. Ce dernier joue un rôle important dans la précipitation du polymère cationique formé en cours de synthèse et dans la formation de particules. US 5 587 415 montre qu'il est possible de s'affranchir de ce monomère en le substituant par un autre équivalent dans lequel le groupe benzyl est remplacé par une chaîne alkyl suffisamment hydrophobe en C4 - C10. De même US 5 614 602 montre qu'on peut atteindre le même résultat en substituant partiellement le (méth)acrylamide par un N-alkylacrylamide et/ou par un N,N dialkylacrylamide. La demanderesse a maintenant trouvé que l'on peut préparer des dispersions aqueuses stables et de faible viscosité contenant un sel, un polymère hydrosoluble et un dispersant à base de polymère cationique ayant des motifs hydrophobes.

Selon l'invention par sel on entend les sels minéraux dont la solution aqueuse dissout le polymère dispersant sans dissoudre le polymère dispersé. Ce dernier étant précipité dès sa formation. Les sels représentatifs sont le sulfate d'ammonium, le sulfate de sodium, le sulfate d'aluminium, le chlorure de sodium, le dihydrogénophosphate de sodium.

Les dispersions de l'invention contiennent :
- de 21 à 24 % en poids et de préférence de 21,5 à 23 % de sel,
- de 0,5 à 25 % en poids et de préférence de 1 à 10 % de polymère dispersant,
- de 10 à 40 % en poids et de préférence de 15 à 30 % de polymère dispersé.

Le sel est ajouté en 2 fois. Pendant la polymérisation on ajoute de 16 à 19 % et de préférence de 16,5 à 18 % en poids, et en post-addition on rajoute 5 %.

Les dispersants constituant un des objets de l'invention peuvent être les polymères cationiques, amphotères ou non ioniques à motifs hydrophobes.

La demanderesse a découvert aussi que, afin de renforcer la stabilité dans le temps de l'émulsion, la solution contenant le dispersant doit avoir une viscosité suffisante afin d'éviter la sédimentation des particules. Un des moyens pour augmenter la viscosité de la solution du dispersant est l'utilisation d'un dispersant à caractère associatif, c'est-à-dire un copolymère ayant au moins une séquence hydrophobe et au moins une séquence hydrophile et capable de s'organiser en créant des micro-zones hydrophiles et/ou hydrophobes. Les motifs fortement hydrophobes, notamment styréniques ou acryliques à longue chaîne alkyle confèrent ce caractère associatif et donc augmentent la viscosité ainsi qu'une fonction secondaire telle que l'élimination des micro-organismes organiques polluants présents dans les eaux usées.

Les dispersants de l'invention sont des polymères comprenant :
a) de 15 à 99 % en mole et de préférence de 20 à 60 % d'au moins un reste de monomère hydrosoluble choisi dans le groupe A constitué de :
   - un monomère **A1** répondant aux formules générales suivantes : 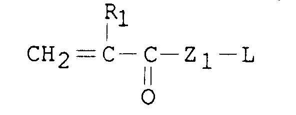 dans laquelle
      R1 = H ou CH3
      Z1 = O, NH ou NR2 ave R2 un groupe alkyl ou hydroxyalkyl en C1-C6 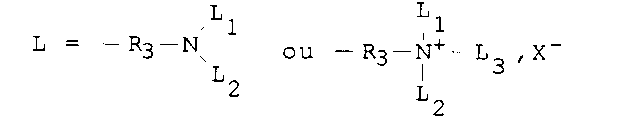
      ou R3 = alkyl ou hydroxyalkyl en C1-C6 et L1, L2, L3 représentent séparément un H ou un alkyl ou un hydroxyalkyl en C1-6, un cycloalkyl en C5-C18, un aryl ou alkylaryl en C6-C18.
      X est un ion monovalent tel que Cl, SNC,... 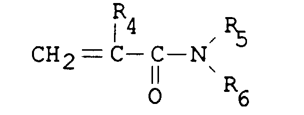 dans laquelle
      R4 = H ou un méthyl
      R5 et R6 représentent séparément un H, ou un alkyl ou un hydroxyalkyl en C1-C6 ou un cycloalkyl en C5-C12
   - Les monomères A2 ayant une fonction acide carboxylique et leurs dérivés tels que les acides acrylique, méthacrylique, itaconique et leurs sels
   - Les monomères renfermant des fonctions ammonium quaternaires tels que le chlorure de diallyldiméthyl, ammonium désigné par DADMAC, ou l'anhydride maléique imidizé et salifié.
   - tout autre monomère hydrosoluble différent de ceux cités précédemment et polymérisable par voie radicalaire en émulsion
b) de 1 à 85 % et de préférence de 40 à 80 % de reste d'au moins un monomère B choisi dans le groupe constitué de :
   - les monomères **B1** répondant à la formule suivante : 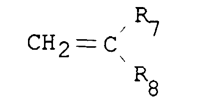 dans laquelle
      R7 représente un H ou un groupe alkyl en C1-C12, ou un cycloalkyl en C5-C12 ou un aryl en C6-C12 ou un arylalkyl en C8-C32.
      R8 représente un H ou un groupe alkyl en C1-C12, ou un cycloalkyl en C5-C12 ou un aryl en C6-C12 ou un arylalkyl en C8-C32.
      R7 et R8 pouvant être différents ou identiques
   - les molécules **B2** répondant à la formule générale suivante : 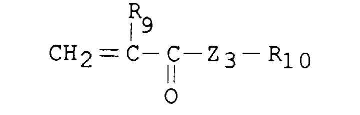 dans laquelle
      R9 = H ou CH3
      Z3 représente un O, NH3 ou NR11 avec R11 = alkyl en C1-C4
      R10 représente un groupe alkyl en C1-C32, cycloalkyl en C5-C12 ou aryl en C6-C12 ou arylalkyl en C8-C32
   - tout autre monomère **B3** ayant une double liaison polymérisable. Il s'agit par exemple de l'anhydride maléique, le chlorure de vinylidène, le florure de vinylidène, le chlorure de vinyle, le butadiène, le chloroprène...
c) de 0 à 30 % d'au moins un monomère amphiphile pouvant être choisi dans le groupe C constitué de :
   - les molécules **C1** répondant à l'une des formules aénérales suivantes : 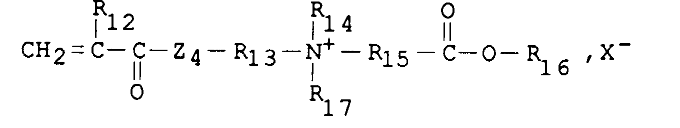 dans laquelle
      Z4 = O, NH, NR21, R21 étant un groupe alkyl en C1-C6 ou cycloalkyl en C5-C12
      R12 = H ou un méthyl
      R13, R14, R15, R17 représentent séparément un alkyl ou hydroxyalkyl en C1-C6 ou cycloalkyl en C5-C12
      R16 représente un alkyl en C1-C32, aryl et/ou arykalkyl en C8-C32
      X est un halogène, pseudohalogen, SO4CH3, acétate, SNC... 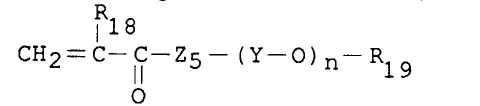 dans laquelle
      R18 = H ou méthyl
      Z5 = O, NH, NR20 avec R20 = alkyl ou hydroxyalkyl en C1-C6
      Y = alkyl en C1-C6
      n est un nombre entier compris entre 1 et 50
      R19 = alkyl en C1-C32, aryl en C6-C32 ou arylalkyl en C6-C32
   - les molécules **A1**.

Les dispersants préférés de l'invention sont :
- les polymères à base de styrène et de chlorure d'acryloxylethyltriméthyl ammonium désigné par ADAMQUAT MC
- les polymères à base de styrène, le chlorure d'acryloxylethyltriméthyl ammonium désigné par ADAMQUAT MC, et les (meth)acrylate à longue chaîne alkyle comme l'acrylate de béhényle (A18-22),
- les polymères à base d'anhydride maléique imidisés, puis salifiés ou quaternisés, et contenant :
- 15 à 90 % molaire et de préférence 26 à 60 % molaire d'anhydride maléique,
- au moins un monomère hydrophobe B1, B2 ou tout autre monomère ayant une double liaison polymérisable.

Ces copolymères d'anhydride maléique doivent être ensuite imidisés puis salififés ou quaternisés pour leur donner le caractère cationique. Des exemples typiques de ces dispersants sont les copolymères styrène anhydride maléique imidisés par des diamines puis salifiés par un acide ou quaternisé par un hallogénure d'alkyl ou de cycloalkyl ou aryl ou arylalkyl. Les dispersants comportant comme motif hydrophobe le styrène peuvent être représentés par la formule générale suivante : 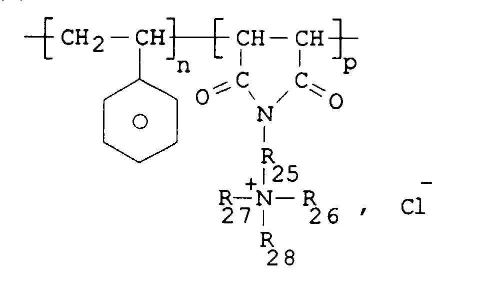 dans laquelle
R25 représente un groupe alkyl ou hydroxyalkyl en C1-C32, aryl en C6-C32 ou arylalkyl en C6-C32
R26, RR27 et R28 = H ou groupe alkyl ou hydroxyalkyl en C1-C32 alkyl, aryl en C6-C32 ou aralkyl en C6-C32
R26, R27 et R28 peuvent être identiques ou différents.

Les polymères dispersants selon l'invention, obtenus à partir de monomères hydrophobe, hydrosoluble (cationique, anionique, non ionique) et éventuellement amphiphile sont préparés selon un procédé batch ou semi-continu par copolymérisation radicalaire en solution dans un solvant ou un mélange de solvants à bas point d'ébullition. L'étape de polymérisation est suivie de la distillation de solvant à bas point d'ébullition et d'une addition d'eau pour obtenir une présentation de dispersant en solution aqueuse sans solvant polluant. Ces solvants sont en général des cétones, alcools et ether. Des exemples typiques de solvant sont l'acétone, méthyl éthyl cétone, l'éthanol. La concentration totale des monomères peut varier de 5 à 75 % en poids et de préférence 20 à 50 %. On effectue la polymérisation en présence d'amorceur (s) qu'on utilise à raison de 0.1 à 4 % et de préférence 0.5 à 2 % par rapport au poids total. Comme amorceurs, on peut utiliser des peroxydes tels que le peroxyde de benzoyle, le peroxyde de lauroyle, le peroxyde de succinyle et le perpivalate de tertiobutyle, ou des composés diazoïques tels que le 2,2'-azobis-isobutyronitrile, le 2,2'azobis-(2,4-dimethylvaleronitrile), et l'azodicarbonamide. On peut également opérer en présence de rayonnements UV et de photo-initiateurs tels que la benzophénone, la méthyl-2-anthraquinone ou le chloro-2-thixanthone. La longueur des chaînes polymériques peut, si on le désire, être réglée à l'aide d'agents de transfert de chaînes tels que les alkylmercaptans, le tétrachlorure de carbone ou le triphénylméthane, utilisés à raison de 0,05 à 3 % par rapport au poids total de monomères. La température de réaction peut varier dans de larges limites, c'est-à-dire de -40°C à 200°C. Préférentiellement, on opère entre 50 et 95°C.

Les dispersants à base de copolymères d'anhydride maléique sont obtenus par imidisation des polymères obtenus à partir de monomère hydrophobe et d'anhydride maléique par une diamine (par exemple le dimethylaminopropylamine) selon la technique décrite dans la littérature. Ce polymère est ensuite salifié par un acide ou quaternisé par un hallogénure d'alkyle comme le chlorure de méthyles ou de benzyle (J. Applied Polymer Science 59, 599-608 1996).

Les polymères hydrosolubles selon l'invention contiennent :
- de 0 à 90 % en mole de restes d'au moins un monomère A2.
- de 5 à 50 % de restes de monomère répondant à la formule suivante : 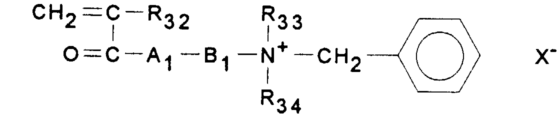
   · X = ion monovalent (Cl, SCN)
   · R₃₂ = H ou CH₃ ; R₃₃ et R₃₄ sont des alkyls en C₁-C₃, A₁ est soit un oxygène ou NH ; B₁ est soit un alkyl ou un hydroxyalkyl en C₂-C₄.
- de 0 à 20 % de restes d'au moins un monomère amphiphile C
- de 0 à 20 % de restes d'au moins un monomère A3.

La synthèse de polymère hydrosoluble peut être réalisée par les techniques de polymérisation connue par l'homme du métier. La dispersion de polymère hydrosoluble selon l'invention est préparée en présence de 0,5 à 25 % et de préférence 1 à 10 % de dispersant copolymère obtenu selon les méthodes décrites ci-dessus, par la polymérisation radicalaire en milieu aqueux salin du mélange de monomères décrit ci-haut. Le mélange de monomères représente de 10 à 40 % et de préférence 15 à 30 % du mélange réactionnel constitué de l'eau, du copolymère dispersant, du sel, et de monomères. La polymérisation peut être amorcée par différents moyens, comme les générateurs de radicaux libres tels que les peroxydes, les composés diazoïques ou les persulfates, ou par irridiation. Le mode préféré selon l'invention est l'amorçage par le 2,2'Azobis (2-aminopropane) hydrochloride, désigné ci-après par ABAH. Ces amorceurs peuvent être combinés avec un accélérateur de décomposition. La température de polymérisation est comprise entre 0 et 100°C et de préférence 40 et 95°C. La conversion est supérieure à 99 %.

Les dispersants ou dispersions de polymère hydrosoluble obtenus peuvent être utilisés pour les applications suivantes : floculant, rétention papier, agent facilitant le nettoyage sur divers supports (textile par exemple), dispersion de charges, agent d'inhibition pour le transfert de pigments et colorants sur divers supports (textile par exemple), épaississants.

### Exemple 1

Dans tous les exemples ci-après, les parts sont données en poids.

### a) préparation du copolymère dispersant

Dans un réacteur de 1 litre, on introduit sous agitation 320 parts d'éthanol, 150 parts de méthyl éthyl cétone, 98 parts de styrène, 228 parts de solution aqueuse à 80 % de chlorure d'acryloxylethyltriméthyl ammonium (QUAT MC), 2 parts de n dodécyl mercaptan. On porte le réacteur à 75°C sous balayage d'azote et on introduit ensuite 0.36 part de 2,2'-azobis-isobutyronitrile (AZDN), et 0.72 part de 2,2'azobis-2,4-dimethylvaleronitrile (V65). Après 2 h 30 de réaction, on amorce la distillation en montrant progressivement la température double enveloppe de 78°C à 99°C. Après avoir soutiré environ 350 parts de solvant, on fait un appoint de 480 parts d'eau et on poursuit la distillation jusqu'à soutirage total du mélange éthanol/méthyl éthyl cétone.

### b) préparation de la dispersion de polymère hydrosoluble à base de dispersant copolymère styrène / QUAT MC

Dans un réacteur de 1 litre, on introduit 152.3 parts d'eau, 63.5 parts de solution aqueuse à 38.9 % de copolymère dispersant (styrène/QUAT MC 50/50) molaire) préparé précédemment, 63.4 parts de solution aqueuse à 80 % de chlorure d'acryloxyethldiméthylbenzyl ammonium (QUAT BZ), 69.4 parts d'acrylamide à 50 % dans l'eau, 18.2 parts de solution aqueuse à 80 % de chlorure d'acryloxyethyltriméthylammonium (QUAT MC), 80 parts de sulfate d'ammonium, 4.5 g de glycérine. On porte le réacteur à 60°C pendant 30 minutes sous balayage d'azote et on introduit 0.02 part de 2,2'-azobis (2-aminopropane) hydrochloride (ABAH) dilué dans 5 parts d'eau. La température est maintenue à 60°C pendant 1 h 30. Ensuite on rajoute 0.05 part d'ABAH dilué dans 5 parts d'eau et on laisse la réaction se faire pendant 4 h supplémentaires. On réalise ensuite une post addition de 30 parts de sulfate d'ammonium, 0.5 part de thiocyanate d'ammonium, et 5 parts d'acide acétique. Après 30 minutes de mélange, on refroidit à 30°C et on vide le réacteur.

*On obtient une dispersion stable de copolymère acrylamide/QUATBZ/QUATMC 65/25/10 molaire, stabilisé par le dispersant* *copolymère styrène/QUATMC 50/50 molaire de viscosité Brookfield 60 cp à 25°C.*

### Exemples 2, 3, 4, 5, 6, 7, 8

Identiques à l'exemple 1 sauf que le copolymère dispersant synthétisé selon le mode opératoire précédent est différent et contient un troisième comonomère qui est l'acrylate de béhényle (A18-22).

Les compositions du mélange de monomères utilisées pour la synthèse de la dispersion de copolymère hydrosoluble ainsi que celles des copolymères dispersants sont listées ci-dessous. Le copolymère dispersé de l'exemple 6 contient un quatrième comonomère methacrylate polyéthoxylé avec un groupement triphénylstyril (SIPOMER SEM) qui confère au copolymère dispersé une fonction secondaire hydrophobe pouvant capter les micro-polluants organiques dans les eaux usées. Par ailleurs, la présence de l'acide méthacrylique dans les exemples 6 et 7 confère au copolymère dispersé un caractère amphotère. La structure du comonomère (SIPOMER SEM) est donnée ci-après :

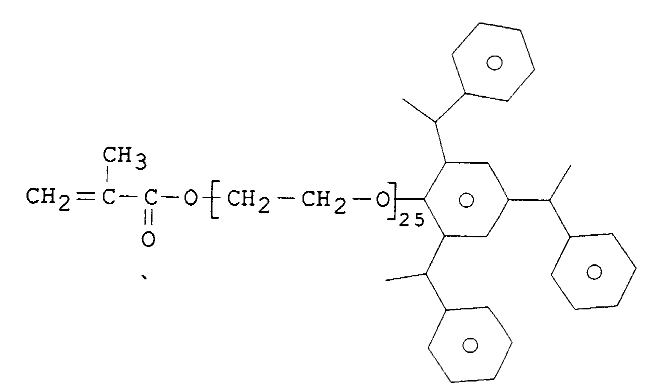

Il a été noté que l'incorporation d'un acrylate à longue chaîne alkyle tel que l'acrylate de béhényle (A18-22) améliore la stabilité des dispersions synthétisées. En effet, une solution aqueuse à 30 % de dispersant polymère styrène/QUATMC 1/1molaire a une viscosité de 100 cp. L'incorporation d'un faible taux de motif A18-22 (copolymère dispersant styrène/A18-22/QUATMC 0,95/0,05/1) induit un caractère associatif au dispersant et fait augmenter la viscosité de 100 cp à 12500 cp. L'émulsion résultante (exemple 8) a une stabilité dans le temps nettement améliorée comparativement à l'exemple 1 sans A18-22.

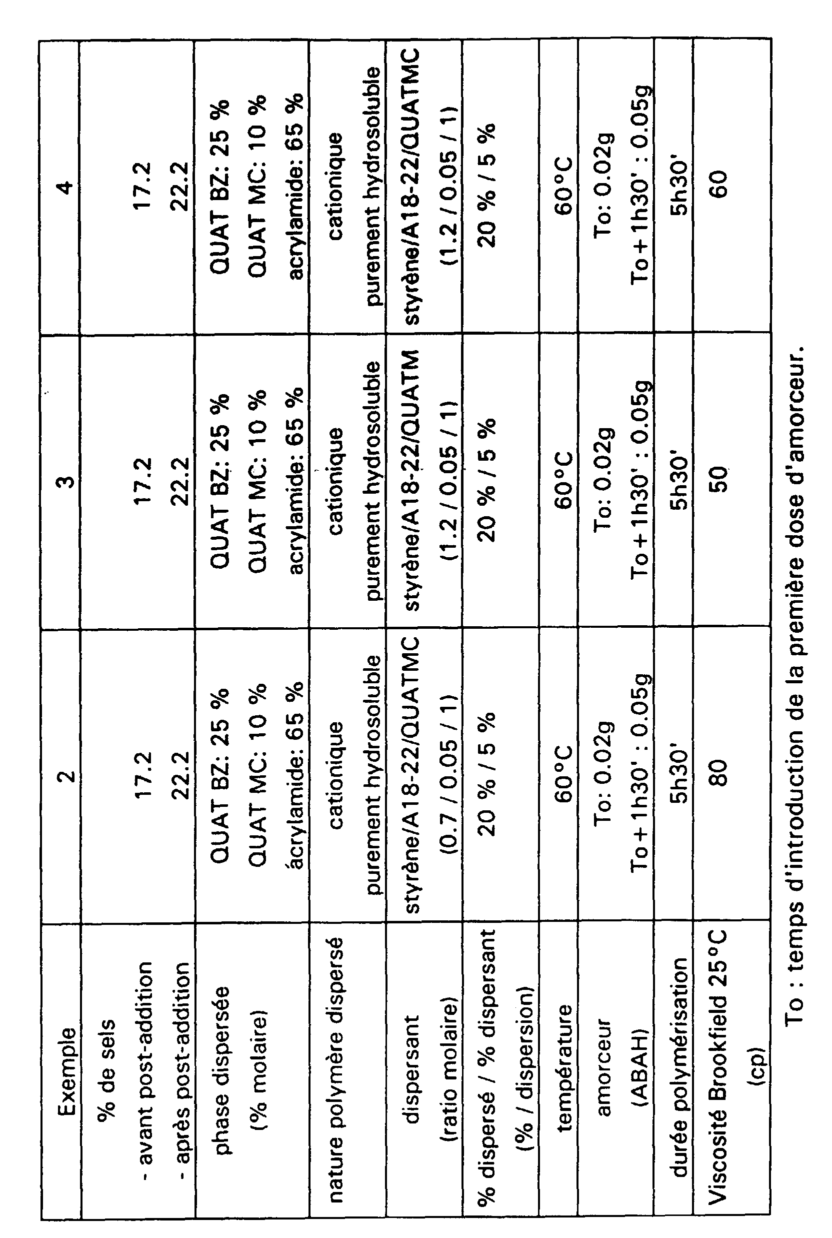

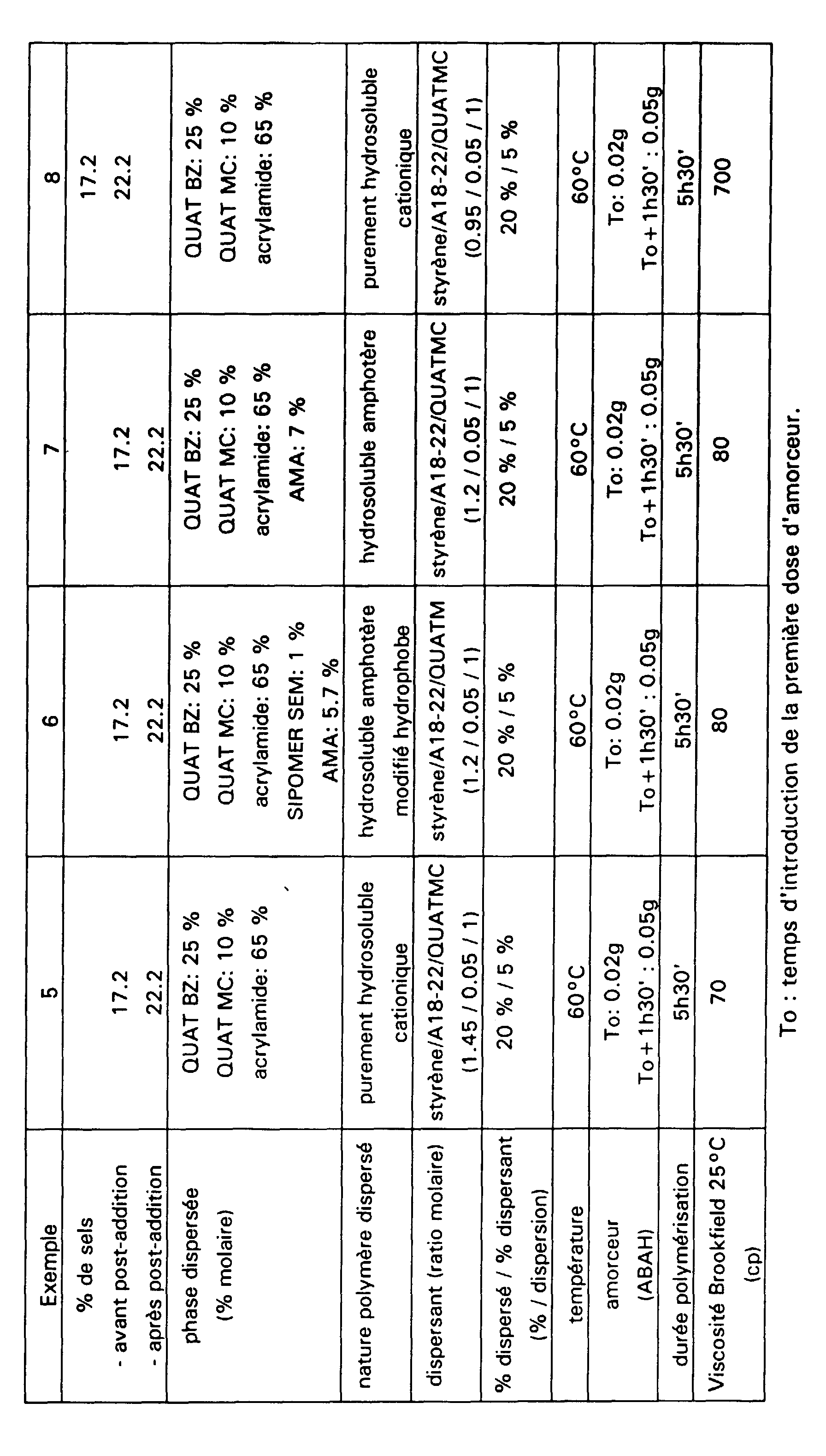

## Revendications

1. Dispersion aqueuse saline contenant :
- de 21 à 24 % en poids de sel,
- de 0,5 à 25 % en poids de polymère dispersant, et
- de 10 à 40 % en poids de polymère dispersé
caractérisée en ce que le polymère dispersant contient :
a - de 15 à 99 % en mole d'au moins un motif dérivé par polymérisation d'un monomère hydrosoluble choisi dans le groupe A constitué de :
- les monomères A1 répondant à la formule : 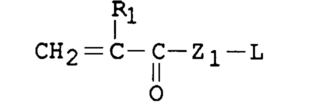 dans laquelle
R1 = H ou CH3
Z1 = O, NH ou NR2 ave R2 un groupe alkyl ou hydroxyalkyl en C₁-C₆ 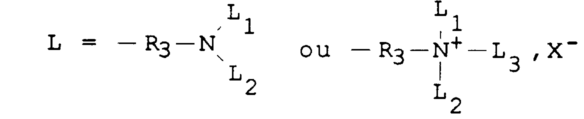
ou R₃ = alkyl ou hydroxyalkyl en C₁-C₆ et L₁, L₂, L₃ représentent séparément un H ou un alkyl ou un hydroxyalkyl en C₁-C₆, un cycloalkyl en C₅-C₁₈, un aryl ou alkylaryl en C₆-C₁₈.
X est un ion monovalent tel que Cl, SNC,...
- les monomères A2 répondant à la formule : 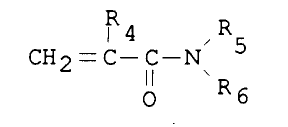 dans laquelle
R₄ = H ou CH₃
R₅ et R₆ représentent séparément un H, un alkyl ou un hydroxyalkyl en C₁-C₆ ou un cycloalkyl en C₅-C₁₆
- les monomères A₃ ayant une fonction acide carboxylique tels que les acides acrylique, méthacrylique, itaconique et leurs sels
- les monomères A₄ renfermant des fonctions ammonium quaternaires tels que l'anhydride maléique imidizé et salifié ou le chlorure d'acryloxyéthyltriméthylammonium,
b - de 1 à 85 % en mole d'au moins un motif dérivé par polymérisation d'un monomère hydrophobe B,
c - de 0 à 30 % en mole d'au moins un motif dérivé par polymérisation d'un monomère amphiphile C.

2. Dispersion aqueuse selon la revendication 1 caractérisée en ce que le polymère dispersant contient de préférence
- de 20 à 60 % en mole d'au moins un motif dérivé par polymérisation d'un monomère hydrosoluble A, et
- de 40 à 80 % en mole d'au moins un motif dérivé par polymérisation d'un monomère hydrophobe B.

3. Dispersion aqueuse selon la revendication 1 ou 2 caractérisée en ce que le monomère A est le chlorure d'acryloxyéthyltriméthylammonium ou l'anhydride maléique imidisé, salifié ou quaternisé.

4. Dispersion aqueuse selon l'une quelconque des revendications 1 à 3 caractérisée en ce que le monomère B est choisi dans le groupe contenant :
- les monomères B₁ répondant à la formule suivante : 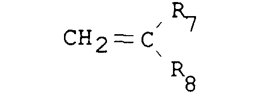 dans laquelle
R₇ représente un H ou un groupe alkyl en C₁-C_{12,} ou un cycloalkyl en C₅-C₁₂ ou un aryl en C₆-C₁₂ ou un arylalkyl en C₈-C₃₂.
R₈ représente un H ou un groupe alkyl en C₁-C_{12,} ou un cycloalkyl en C₅-C₁₂ ou un aryl en C₆-C₁₂ ou un arylalkyl en C₈-C₃₂.
R₇ et R₈ pouvant être différents ou identiques
- les molécules **B2** répondant à la formule générale suivante : 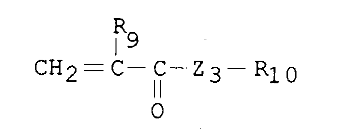 dans laquelle
R₉ = H ou CH₃
Z₃ représente un O, NH₃ ou NR₁₁ avec R₁₁ = alkyl en C₁-C₄
R₁₀ représente un groupe alkyl en C₁-C₃₂, cycloalkyl en C₅-C₁₂ ou aryl en C₆-C₁₂ ou arylalkyl en C₈-C₃₂
- tout autre monomère **B3** ayant une double liaison polymérisable. Il s'agit par exemple de l'anhydride maléique, le chlorure de vinylidéne, le florure de vinylidène, le chlorure de vinyle, le butadiène, le chloroprène...

5. Dispersion aqueuse selon l'une des revendications précédentes caractérisée en ce que le monomère B est le styrène ou l'acrylate de béhényle.

6. Dispersion aqueuse selon l'une quelconque des revendications 1 à 5 caractérisée en ce que le polymère dispersé contient
- de 5 à 50 % en mole de restes d'au moins un monomère A₁
- de 5 à 50 % de restes de monomère répondant à la formule : 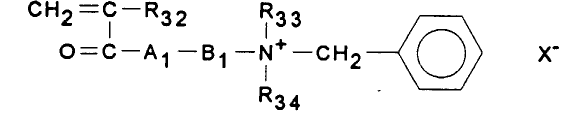
· X = ion monovalent (Cl, SNC)
· R₃₂ = H ou CH₃ ; R₃₃ et R₃₄ sont des alkyls en C₁₋₃, A₁ est soit un oxygène ou NH ; B₁ est soit un alkyl ou un hydroxyalkylen C₂₋₄,
- de 0 à 90 % en mole de restes d'au moins un monomère A₂
- de 0 à 20 % en mole de restes d'au moins un monomère A₃
- de 0 à 20 % en mole de restes d'au moins un monomère C.

7. Procédé de préparation du polymère dispersant des revendications 1 à 5 caractérisé en ce qu'on polymérise un mélange de monomère contenant :
- de 15 à 99 % et de préférence de 20 à 60 % en mole d'au moins un monomère hydrosoluble choisi dans le groupe A
- de 1 à 85 % et de préférence de 40 à 80 % en mole d'au moins un monomère hydrophobe choisi dans le groupe B
- de 0 à 30 % d'au moins un monomère amphiphile choisi dans le groupe C
en présence de 0,1 à 4 % et de préférence de 0,5 à 2 % en poids par rapport au poids des monomères engagés d'amorceurs, en solution dans un solvant ou un mélange de solvants à point d'ébullition inférieur à 100°C suivie de la distillation du solvant et addition d'eau.

8. Procédé selon la revendication 7 caractérisé en ce que le solvant est choisi dans le groupe constitué de :
- l'acétone
- la méthyl éthyl cétone
- l'éthanol
